(19) **Europäisches Patentamt / European Patent Office / Office européen des brevets**

(11) **EP 4 464 660 A1**

(12) **EUROPEAN PATENT APPLICATION**
published in accordance with Art. 153(4) EPC

(43) Date of publication:
**20.11.2024 Bulletin 2024/47**

(21) Application number: **23883135.8**

(22) Date of filing: **26.10.2023**

(51) International Patent Classification (IPC):
*C01B 32/158* (2017.01)   *C01B 32/174* (2017.01)
*H01M 4/62* (2006.01)   *H01M 4/02* (2006.01)

(52) Cooperative Patent Classification (CPC):
**C01B 32/158; C01B 32/174; H01M 4/02;**
**H01M 4/62;** Y02E 60/10

(86) International application number:
**PCT/KR2023/016771**

(87) International publication number:
**WO 2024/091030 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.10.2022 KR 20220141851**

(71) Applicant: **LG Chem, Ltd.
Yeongdeungpo-gu
Seoul 07336 (KR)**

(72) Inventors:
• **KIM, Sung Jin
  Daejeon 34122 (KR)**
• **OH, Eu Gene
  Daejeon 34122 (KR)**
• **KIM, Og Sin
  Daejeon 34122 (KR)**
• **GIM, Min Yeong
  Daejeon 34122 (KR)**
• **KIM, Se Hyun
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **CARBON NANOTUBES AND DISPERSION SOLUTION COMPRISING SAME**

(57)   The present invention relates to carbon nanotubes that satisfy a specific equation. The carbon nanotubes of the present invention have both excellent dispersibility and electrical conductivity when applied as a dispersion, and thus, are particularly suitable for use as a conductive material in secondary batteries.

**Description**

**[TECHNICAL FIELD]**

**Cross-reference to Related Application**

This application claims the benefit of priority to Korean Patent Application No. 10-2022-0141851 filed on October 28, 2022, the disclosure of which is incorporated herein by reference in its entirety.

**Technical Field**

The present invention relates to a carbon nanotube having low viscosity and low slurry powder resistance when preparing a dispersion, and a dispersion including the carbon nanotube.

**[BACKGROUND ART]**

Depending on the shape of the material, carbon nanomaterials include fullerene, carbon nanotube (CNT), graphene, and graphite nano plate. Among them, the carbon nanotube is a macromolecule in which a hexagonal honeycomb-shaped graphite surface, in which one carbon atom is bonded to three other carbon atoms, is rolled up into a nano-sized diameter.

The carbon nanotube is hollow and light, and has electrical conductivity as good as copper, thermal conductivity as good as diamond, and tensile strength as good as steel. Depending on the rolled form, it is also classified into single-walled carbon nanotube (SWCNT), multi-walled carbon nanotube (MWCNT), and rope carbon nanotube.

Recently, the area where the most active research is being conducted on the use of carbon nanotubes is in the field of lithium secondary batteries. The ultimate goal of the lithium secondary batteries is to store more electrical energy in a smaller size. As one of the methods for manufacturing an electrode having a higher energy density per unit volume by improving the electrode density of the lithium secondary battery, a method of applying the carbon nanotubes as a conductive material is being studied. In general, since high-density electrodes are formed by molding electrode active material particles having a size of several $\mu$m to several tens of $\mu$m by a high-pressure press, it is easy that the particles are deformed during the molding process, the space between the particles is reduced, and electrolyte permeability is reduced. To solve this problem, a material with excellent electrical conductivity and strength is used as a conductive material when manufacturing the electrodes. Carbon nanotubes are also widely used as the conductive material because they have excellent strength and electrical conductivity. When the conductive material is used in manufacturing the electrode, the conductive material is dispersed between the compressed electrode active materials to maintain micropores between the active material particles, thereby facilitating penetration of an electrolyte, and reducing resistance within the electrode due to excellent conductivity.

However, when using carbon nanotubes as a conductive material, the most problematic is the low solubility and dispersibility of the carbon nanotubes themselves. The carbon nanotubes have a problem in that they do not achieve a stable dispersion in an aqueous solution due to strong van der Waals attraction between them and agglomeration occurs. If the carbon nanotubes aggregate in the dispersion, the processability of the dispersion deteriorates and the dispersion cannot be applied uniformly. Therefore, it is preferable to apply the dispersion in a state in which the viscosity of the dispersion is minimized.

As a method for improving the poor dispersibility of the carbon nanotube dispersions, various methods are known. For example, there has been proposed a method of dispersing carbon nanotubes in a dispersion medium through mechanical dispersion treatment such as ultrasonic treatment. However, in the case of this method, the dispersibility is excellent while ultrasonic waves are being irradiated, but the carbon nanotubes begin to aggregate immediately after the ultrasonic irradiation is terminated, and even when the concentration of carbon nanotubes is higher than a certain level, there is also a problem that the carbon nanotubes quickly aggregate. In addition, methods for dispersing and stabilizing carbon nanotubes using various dispersants have been proposed, but these methods also have the problem that it is difficult to suppress an increase in viscosity that may occur when the carbon nanotubes are dispersed at a high concentration in a dispersion medium.

Therefore, it is necessary to manufacture a novel carbon nanotube in which the dispersibility can be further enhanced by improving the properties of the carbon nanotube itself, rather than by mechanical dispersion treatment such as ultrasonic treatment or auxiliary means such as the use of dispersants.

**Prior Art Literature**

(Patent Document 1) KR 10-2017-0031061 A (published on March 20, 2017)

[DISCLOSURE]

[TECHNICAL PROBLEM]

An object of the present invention is to provide a novel carbon nanotube that is particularly suitable for use as a conductive material due to low viscosity and low slurry powder resistance when manufacturing a dispersion, and a dispersion including the carbon nanotube.

[TECHNICAL SOLUTION]

In order to solve the above problem, the present invention provides a novel carbon nanotube, a dispersion containing the carbon nanotube, and a positive electrode slurry composition including the dispersion.

(1) Specifically, the present invention provides a carbon nanotube characterized by satisfying Equation 1 below:

[Equation 1]

$$-0.004 * A + 0.0385 \leq R \leq -0.004 * A + 0.0425$$

In equation 1 above:

R is the powder resistance of the carbon nanotubes ($\Omega \cdot cm$),
A is $\ln\{$ (purity of carbon nanotube (weight%) * specific surface area ($m^2/g$)) / bulk density ($kg/m^3$)$\}$,
wherein the specific surface area of the carbon nanotube is 320 $m^2/g$ or more, and
the bulk density of the carbon nanotube is 30 $kg/m^3$ or less.

(2) The present invention provides the carbon nanotube according to (1) above, wherein the specific surface area of the carbon nanotube is 320 to 500 m2/g.
(3) The present invention provides the carbon nanotube according to (1) or (2) above, wherein the bulk density of the carbon nanotube is 15 to 30 $kg/m^3$.
(4) The present invention provides the carbon nanotube according to any one of (1) to (3) above, wherein R is 0.0125 $\Omega \cdot cm$ or less.
(5) The present invention provides the carbon nanotube according to any one of (1) to (4) above, wherein R is 0.0080 to 0.0125 $\Omega \cdot cm$.
(6) The present invention provides a carbon nanotube dispersion including the carbon nanotube according to any one of (1) to (5) above, and a dispersion medium.
(7) The present invention provides the carbon nanotube dispersion according to (6) above, wherein the dispersion medium is at least one selected from the group consisting of N-methylpyrrolidone, pyridine, dimethylaminobenzene, and diethylaminobenzene.
(8) The present invention provides the carbon nanotube dispersion according to (6) or (7) above, wherein the carbon nanotube content in the dispersion is 0.05 to 5% by weight.
(9) The present invention provides a positive electrode slurry composition including the carbon nanotube dispersion according to any one of (6) to (8) above, a positive electrode material, and a stabilizer.
(10) The present invention provides the positive electrode slurry composition according to (9) above, wherein the stabilizer is contained in an amount of 10 to 100% by weight based on the content of the carbon nanotube in the positive electrode slurry composition.

[ADVANTAGEOUS EFFECTS]

The carbon nanotubes of the present invention have a low viscosity when preparing a dispersion, allowing the carbon nanotube content in the dispersion to be a certain level or more, and also have low slurry powder resistance, thereby making them particularly suitable for use as a conductive material.

**[BEST MODES OF THE INVENTION]**

Hereinafter, the present invention will be described in more detail.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

The term 'carbon nanotube' used in the present invention is a secondary structure formed by gathering units of carbon nanotubes to form a bundle entirely or partially, wherein the carbon nanotube unit has a graphite sheet in the shape of a cylinder with a nano-sized diameter, and has a sp2 bond structure. In this case, the characteristics of a conductor or semiconductor may appear depending on the angle and structure in which the graphite surface is rolled. Depending on the number of bonds forming the wall, the carbon nanotube unit may be divided into single-walled carbon nanotube (SWCNT), double-walled carbon nanotube (DWCNT), and multi-walled carbon nanotube (MWCNT), wherein the thinner the wall thickness, the lower the resistance.

The carbon nanotubes of the present invention may include one or more of single-walled, double-walled, and multi-walled carbon nanotube units.

**Carbon nanotube**

The present invention provides a carbon nanotube characterized by satisfying Equation 1 below:

$$[\text{Equation 1}]$$

$$-0.004 * A + 0.0385 \leq R \leq -0.004 * A + 0.0425$$

In equation 1 above:

R is the powder resistance of the carbon nanotubes ($\Omega \cdot cm$),
A is $\ln\{$(purity of carbon nanotube (weight%) * specific surface area ($m^2/g$)) / bulk density ($kg/m^3$)$\}$,
wherein the specific surface area of the carbon nanotube is 320 $m^2/g$ or more, and
the bulk density of the carbon nanotube is 30 $kg/m^3$ or less.

The inventors of the present invention have studied the properties of carbon nanotubes that enable both viscosity and conductivity characteristics to be maintained at an excellent level when preparing a dispersion, and as a result, have confirmed that when the powder resistance, purity, specific surface area, and bulk density of the carbon nanotubes satisfy Equation 1 above, the specific surface area of the carbon nanotubes is 320 $m^2/g$ or more, and the bulk density is 30 $kg/m^3$ or less, both the dispersibility and electrical conductivity of the corresponding carbon nanotubes can be excellently maintained, thereby completing the present invention.

More specifically, when changing the manufacturing conditions of the catalyst used to produce carbon nanotubes, specifically the active ingredient content, the ratio of the main catalyst component to the cocatalyst component, the content of organic acid in the precursor solution, the calcination temperature, or the like, the properties of the carbon nanotubes produced from the corresponding catalyst also change. Therefore, various carbon nanotubes with different properties can be synthesized by changing the catalyst preparation conditions. Furthermore, as a result of confirming the correlation between the dispersibility, electrical conductivity, and physical properties of various synthesized carbon nanotubes in various ways, it has been found that the carbon nanotubes satisfying Equation 1 have excellent dispersibility and electrical conductivity at the same time.

More specifically, Equation 1 above means that there is a correlation between the powder resistance, purity, specific surface area, and bulk density of the carbon nanotubes. Equation 1 above was derived based on various data, and it can be confirmed that the carbon nanotubes satisfying Equation 1 have excellent dispersibility and electrical conductivity at the same time.

The A and R values in Equation 1 above have different units, respectively, but in the present invention, the units of each value are ignored, and each value is assumed to be a dimensionless number. However, since each value may vary depending on the units of powder resistance, purity, specific surface area, and bulk density of the carbon nanotubes, which are variables of each value, the units of each variable are fixed as follows when applying Equation 1 above:

Unit of powder resistance (R) of carbon nanotubes: $\Omega\cdot$cm
Unit of purity of carbon nanotubes: % by weight
Unit of specific surface area of carbon nanotubes: $m^2/g$
Unit of bulk density of carbon nanotubes: $kg/m^3$

Meanwhile, in the carbon nanotubes provided by the present invention, the specific surface area of the carbon nanotubes may be 320 $m^2/g$ or more, preferably 320 to 500 $m^2/g$. If carbon nanotubes are defined only by Equation 1 above without limiting the range of the specific surface area value of carbon nanotubes, the carbon nanotubes satisfying Equation 1 may be substantially infinite, including not only carbon nanotubes that have both excellent dispersibility and electrical conductivity as desired by the present invention, but also carbon nanotubes that are not excellent in dispersibility and/or electrical conductivity. Therefore, the carbon nanotubes of the present invention must satisfy Equation 1 above and also have a specific surface area within the above-mentioned range. Meanwhile, the specific surface area may be measured according to the BET method, and more specifically, it may be calculated by determining the amount of nitrogen gas adsorbed under liquid nitrogen temperature (77K) using BELSORP-mini II of BEL Japan.

Furthermore, the carbon nanotubes of the present invention may have a bulk density of 30 $kg/m^3$ or less, preferably 15 to 30 $kg/m^3$. When the bulk density of the carbon nanotubes is within the above-described range while satisfying Equation 1 and the specific surface area conditions described above, the carbon nanotubes can have particularly excellent dispersibility and electrical conductivity, and further can exhibit sufficient electrical conductivity even with a low carbon nanotube content when preparing a dispersion. Meanwhile, the bulk density can be calculated by measuring the weight of carbon nanotubes contained in a container in free fall using a 25ml SUS measuring cup and dividing the measured weight by the volume of the container.

In addition, R, which is the powder resistance of the carbon nanotubes of the present invention, may be 0.0125 $\Omega\cdot$cm or less, and particularly preferably 0.0080 to 0.0125 Q cm. As in the case of the bulk density described above, when the powder resistance of the carbon nanotube is within the above-described range while satisfying Equation 1 and the specific surface area conditions described above, the electrical conductivity may be particularly excellent. Meanwhile, the powder resistance may be measured by measuring the resistance according to pressure when the compressed density is 1 g/cc by using MCP-PD51 equipment of Nittoseiko Analytech.

In addition, the carbon nanotubes of the present invention may have a purity of 80% by weight or more, and particularly preferably 83% by weight or more. The purity refers to the content of carbon nanotubes remaining after the impurities in the carbon nanotubes are removed, and can be calculated using the following equation:

Purity = (carbon nanotube yield - catalyst input amount) / carbon nanotube yield * 100%

**Carbon nanotube dispersion**

The present invention provides a dispersion including the carbon nanotubes described above. More specifically, the present invention provides a carbon nanotube dispersion including the above carbon nanotube and a dispersion medium.

In the carbon nanotube dispersion of the present invention, the dispersion medium may be at least one selected from the group consisting of N-methylpyrrolidone, pyridine, dimethylaminobenzene, and diethylaminobenzene, and preferably N-methylpyrrolidone. When the above-listed dispersion medium is used, the carbon nanotubes can be smoothly dispersed, and only the dispersion medium can be easily and selectively removed during the subsequent application and calcination process of the dispersion.

In the carbon nanotube dispersion of the present invention, the carbon nanotube content in the dispersion may be 0.05 to 5% by weight, preferably 0.5 to 3% by weight. When the carbon nanotube content in the dispersion is lower than the above-mentioned range, sufficient electrical conductivity cannot be achieved, and if the carbon nanotube content is higher than the above-mentioned range, agglomeration of excessively added carbon nanotubes occurs, causing an increase in viscosity, and thus, the processability of the dispersion itself may be greatly reduced.

In the carbon nanotube dispersion of the present invention, the dispersion includes, as a dispersing agent, polysaccharides and monosaccharides such as carboxymethylcellulose (CMC), hydroxyethylcellulose, pectin, alginic acid, guar gum, locust bean gum, gum arabic, dextrin, altose, sorbitol, lactose, rice starch and sucrose; sodium cholate, gelatin, and polyvinyl alcohol; anionic surfactants, such as naphthalene sulfonic acid-formaldehyde condensate and alkyl benzenesulfonate, cationic surfactants, nonionic surfactants, polyether-modified silicone surfactants, and hydrogenated nitrile butadiene rubber (HNBR) etc. Particularly preferably, the dispersing agent may be HNBR. The dispersing agent may be included in an amount of 0.1 to 5% by weight, preferably 0.3 to 3% by weight, based on the total weight of the dispersion. Within the above content range, the viscosity of the dispersion may be low, and the viscosity stability may be excellent.

**Positive electrode slurry composition**

The carbon nanotube dispersion provided by the present invention has excellent electrical conductivity and thus can be used as a conductive material in a positive electrode slurry composition. Accordingly, the present invention provides a positive electrode slurry composition containing the dispersion.

Specifically, the present invention covers a positive electrode slurry composition including the above carbon nanotube dispersion, a positive electrode material, and a stabilizer. The dispersion was the same as previously described.

The positive electrode material is not particularly limited as long as it can be used as a positive electrode material for a lithium secondary battery. For example, the positive electrode material may be any one or a mixture of two or more selected from the group consisting of $LiCoO_2$, $LiNiO_2$, $LiMnO_2$, $LiMn_2O_4$, $Li(Ni_aCo_bMn_c)O_2$ (here, $0 < a < 1$, $0 < b < 1$, $0 < c < 1$, $a+b+c=1$), $LiNi_{1-Y}Co_YO_2$, $LiCo_{1-Y}Mn_YO2$, $LiNi_{1-Y}Mn_YO2$ (here, $0 \leq Y < 1$), $Li(Ni_aCo_bMn_c)O_4$ ($0 < a < 2$, $0 < b < 2$, $0 < c < 2$, $a+b+c=2$), $LiMn_{2-z}Ni_zO4$, $LiMn_{2-z}Co_zO_4$ (here, $0 < Z < 2$), which are known positive electrode materials.

In the carbon nanotube positive electrode slurry composition of the present invention, the stabilizer may be polyvinylidene fluoride (PVDF), polyvinylpyrrolidone (PVP), or a mixture thereof. The stabilizer may be included in an amount of 10 to 100% by weight, preferably 30 to 70% by weight, based on the content of the carbon nanotube in the positive electrode slurry composition. Within the above content range, the stability during slurry production may be more excellent.

Hereinafter, the present invention will be described in more detail by way of examples and experimental examples to specifically illustrate the present invention, but the present invention is not limited to these examples and experimental examples. The examples according to the present invention may be modified in various different forms, and the scope of the present invention should not be construed as being limited to the examples described in detail below. The examples of the present invention are provided to explain the present invention more completely to those skilled in the art.

**Catalyst Preparation Example**

$Co(NO_3)_2 \cdot 6H_2O$ was used as a cobalt precursor, and $NH_4VO_3$ was used as a vanadium precursor. A catalyst precursor composition was prepared by dissolving the cobalt precursor and vanadium precursor in water along with citric anhydride (CA) as a complexing agent. The catalyst precursor composition was sufficiently stirred, and then added to hydrotalcite as a support. Afterwards, it was dried at 190°C for 5 hours using an oven, and then calcined for 4 hours at a specific calcination temperature and in the atmosphere to complete the catalyst. In the above process, the added amount of vanadium was 0.3 mole ratio relative to 1 mole of cobalt, and the amount of the citric anhydride was 0.13 mole ratio relative to 1 mole of cobalt. In the above process, various catalysts were prepared by varying the cobalt content in the catalyst precursor composition, the ratio of cobalt to vanadium, the ratio of citric anhydride to vanadium, the calcination temperature, etc., and the catalyst preparation conditions in each preparation example are summarized in Table 1 below.

[Table 1]

| | Cobalt content in the composition (% by weight) | Co/V (molar ratio) | Ca/V (molar ratio) | Calcination temperature (°C) |
|---|---|---|---|---|
| Catalyst Preparation Example 1 | 5.0 | 3.33 | 0.44 | 300 |
| Catalyst Preparation Example 2 | 5.5 | 3.33 | 0.44 | 300 |
| Catalyst Preparation Example 3 | 6.0 | 3.33 | 0.44 | 300 |
| Catalyst Preparation Example 4 | 6.5 | 3.33 | 0.44 | 300 |
| Catalyst Preparation Example 5 | 8.5 | 3.33 | 0.44 | 300 |
| Catalyst Preparation Example 6 | 11.0 | 3.33 | 0.44 | 300 |
| Catalyst Preparation Example 7 | 14.0 | 3.33 | 0.44 | 300 |
| Catalyst Preparation Example 8 | 6.0 | 3.33 | 0.44 | 250 |
| Catalyst Preparation Example 9 | 6.0 | 3.33 | 0.44 | 400 |
| Catalyst Preparation Example 10 | 6.0 | 3.33 | 0.44 | 500 |
| Catalyst Preparation Example 11 | 6.0 | 3.33 | 0.31 | 300 |
| Catalyst Preparation Example 12 | 6.0 | 3.33 | 0.43 | 300 |
| Catalyst Preparation Example 13 | 6.0 | 3.33 | 0.65 | 300 |

(continued)

| | Cobalt content in the composition (% by weight) | Co/V (molar ratio) | Ca/V (molar ratio) | Calcination temperature (°C) |
|---|---|---|---|---|
| Catalyst Preparation Example 14 | 6.0 | 3.33 | 0.87 | 300 |
| Catalyst Preparation Example 15 | 6.0 | 1.00 | 0.44 | 300 |
| Catalyst Preparation Example 16 | 6.0 | 1.70 | 0.44 | 300 |
| Catalyst Preparation Example 17 | 6.0 | 2.50 | 0.44 | 300 |
| Catalyst Preparation Example 18 | 6.0 | 2.90 | 0.44 | 300 |
| Catalyst Preparation Example 19 | 6.0 | 4.90 | 0.44 | 300 |
| Catalyst Preparation Example 20 | 6.0 | 10.00 | 0.44 | 300 |

## Examples and Comparative Examples

Carbon nanotubes were synthesized using the catalyst used in the above catalyst preparation example. Specifically, after 0.3 g of the prepared catalyst was filled in the fixed bed reactor, nitrogen gas was injected into the fixed bed reactor at 1600 sccm, and the temperature inside the reactor was heated to the reaction temperature. Then, ethylene gas as a carbon source gas was injected at 400 sccm, and the reaction was continued for 90 minutes to synthesize carbon nanotubes. The catalysts and reaction temperature conditions used in each example and comparative example are summarized in Table 2 below.

[Table 2]

| | Catalyst | Reaction temperature (°C) |
|---|---|---|
| Example 1-1 | Catalyst Preparation Example 1 | 670 |
| Example 1-2 | Catalyst Preparation Example 2 | 670 |
| Example 1-3 | Catalyst Preparation Example 3 | 670 |
| Example 1-4 | Catalyst Preparation Example 4 | 670 |
| Example 1-5 | Catalyst Preparation Example 5 | 670 |
| Comparative Example 1-1 | Catalyst Preparation Example 6 | 670 |
| Comparative Example 1-2 | Catalyst Preparation Example 7 | 670 |
| Example 2-1 | Catalyst Preparation Example 8 | 670 |
| Example 2-2 | Catalyst Preparation Example 9 | 670 |
| Comparative Example 2-1 | Catalyst Preparation Example 10 | 670 |
| Example 3-1 | Catalyst Preparation Example 11 | 670 |
| Example 3-2 | Catalyst Preparation Example 12 | 670 |
| Comparative Example 3-1 | Catalyst Preparation Example 13 | 670 |
| Comparative Example 3-2 | Catalyst Preparation Example 14 | 670 |
| Example 4-1 | Catalyst Preparation Example 15 | 670 |
| Example 4-2 | Catalyst Preparation Example 16 | 670 |
| Example 4-3 | Catalyst Preparation Example 17 | 670 |
| Example 4-4 | Catalyst Preparation Example 18 | 670 |
| Example 4-5 | Catalyst Preparation Example 19 | 670 |
| Example 4-6 | Catalyst Preparation Example 20 | 670 |
| Example 5-1 | Catalyst Preparation Example 3 | 640 |

(continued)

|  | Catalyst | Reaction temperature (°C) |
|---|---|---|
| Example 5-2 | Catalyst Preparation Example 3 | 610 |

**Experimental Example 1. Check whether the manufactured carbon nanotubes satisfy Equation 1**

The purity, specific surface area, bulk density, and powder resistance of the carbon nanotubes prepared in the above examples and comparative examples were measured, and it was examined whether Equation 1 was satisfied. Each property was measured using the method below.

1) Purity = (obtained amount of carbon nanotubes - added amount of catalyst) / obtained amount of carbon nanotubes * 100%

2) Specific surface area was calculated by determining the amount of nitrogen gas adsorbed under liquid nitrogen temperature (77K) using BELSORP-mini II of BEL Japan.

3) Bulk density was calculated by measuring the weight of carbon nanotubes contained in a container in free fall using a 25ml SUS measuring cup and dividing the measured weight by the volume of the container.

4) Powder resistance was measured by measuring the resistance according to pressure when the compressed density is 1 g/cc by using MCP-PD51 equipment of Nittoseiko Analytech.

The measured results are summarized in Table 3 below.

[Table 3]

|  | Purity (% by weight) | Specific surface area ($m^2$/g) | Bulk density (kg/$m^3$) | Powder resistance ($\Omega \cdot$cm) | Whether Equation 1 is satisfied |
|---|---|---|---|---|---|
| Example 1-1 | 83.17 | 417 | 22.4 | 0.0110 | O |
| Example 1-2 | 90.79 | 422 | 16.8 | 0.0095 | O |
| Example 1-3 | 93.6 | 415 | 17.2 | 0.0097 | O |
| Example 1-4 | 94.1 | 406 | 19.3 | 0.0100 | O |
| Example 1-5 | 96.3 | 325 | 24.0 | 0.0110 | O |
| Comparative Example 1-1 | 96.3 | 287 | 28.4 | 0.0121 | O |
| Comparative Example 1-2 | 96.3 | 240 | 33.0 | 0.0135 | O |
| Example 2-1 | 96.3 | 415 | 12.9 | 0.0090 | O |
| Example 2-2 | 94.1 | 350 | 21.2 | 0.0115 | O |
| Comparative Example 2-1 | 94.3 | 280 | 20.1 | 0.0125 | O |
| Example 3-1 | 90.1 | 391 | 23.3 | 0.0115 | O |
| Example 3-2 | 89.7 | 393 | 23.1 | 0.0116 | O |
| Comparative Example 3-1 | 85.5 | 368 | 32.1 | 0.0144 | O |
| Comparative Example 3-2 | 80.0 | 350 | 38.7 | 0.0180 | X |
| Example 4-1 | 91.5 | 321 | 26.7 | 0.0125 | O |
| Example 4-2 | 89.1 | 346 | 22.0 | 0.0123 | O |
| Example 4-3 | 95.1 | 389 | 20.9 | 0.0105 | O |

(continued)

|  | Purity (% by weight) | Specific surface area ($m^2$/g) | Bulk density (kg/$m^3$) | Powder resistance ($\Omega \cdot$cm) | Whether Equation 1 is satisfied |
|---|---|---|---|---|---|
| Example 4-4 | 94.4 | 404 | 18.7 | 0.0100 | O |
| Example 4-5 | 92.3 | 367 | 16.2 | 0.0108 | O |
| Example 4-6 | 81.5 | 335 | 22.0 | 0.0122 | O |
| Example 5-1 | 95.7 | 372 | 16.0 | 0.0089 | O |
| Example 5-2 | 95.6 | 361 | 18.0 | 0.0091 | O |

As can be seen in Table 3, the carbon nanotubes according to the examples of the present invention satisfy Equation 1. Meanwhile, the carbon nanotubes according to Comparative Examples 1-1, 1-2 and 2-1 satisfy Equation 1, but do not satisfy the specific surface area range required by the present invention. The carbon nanotubes according to Comparative Example 3-1 satisfies Equation 1, but does not satisfy the bulk density range required by the present invention. The carbon nanotube according to Comparative Example 3-2 does not satisfy Equation 1.

**Experimental Example 2. Measurement of viscosity and slurry powder resistance of carbon nanotube dispersion**

A dispersion was prepared by using the carbon nanotubes prepared in the above examples and comparative examples. 1.0 g of the prepared carbon nanotube and 0.6 g of HNBR as a dispersant were added to 98.4 g of N-methylpyrrolidone as a dispersion medium. Then, a dispersion was prepared under conditions of 1500 bar and 3 pass using a high-pressure homogenizer. The prepared dispersion was mixed with a positive electrode material so that the carbon nanotube content was 0.5% by weight, and further PVDF as a stabilizer was added at 60% by weight based on the carbon nanotube content to prepare a slurry. The slurry was dried in an oven at 130°C to remove the dispersion medium and obtain powder to measure the powder resistance.

The viscosity and slurry powder resistance of the prepared dispersion were measured as follows:

1) Viscosity: The viscosity of the dispersion was measured at room temperature using Brookfield's DV2T equipment.
2) Slurry powder resistance: The resistance according to pressure was measured at a compressed density of 2.5 g/cc by using MCP-PD51 equipment of Nittoseiko Analytech.

The measured results are summarized in Table 4 below.

[Table 4]

|  | Viscosity (cP) | Slurry powder resistance (m$\Omega \cdot$cm) |
|---|---|---|
| Example 1-1 | 900 | 6.9 |
| Example 1-2 | 1050 | 7.3 |
| Example 1-3 | 1000 | 6.2 |
| Example 1-4 | 1000 | 7.3 |
| Example 1-5 | 650 | 9.2 |
| Comparative Example 1-1 | 300 | 16.7 |
| Comparative Example 1-2 | 250 | 23.2 |
| Example 2-1 | 1000 | 5.8 |
| Example 2-2 | 700 | 7.9 |
| Comparative Example 2-1 | 300 | 19.6 |
| Example 3-1 | 950 | 7.2 |
| Example 3-2 | 950 | 7.3 |
| Comparative Example 3-1 | 800 | 16.9 |

(continued)

| | Viscosity (cP) | Slurry powder resistance (mΩ·cm) |
|---|---|---|
| Comparative Example 3-2 | 750 | 18.9 |
| Example 4-1 | 650 | 10.0 |
| Example 4-2 | 700 | 9.5 |
| Example 4-3 | 950 | 7.4 |
| Example 4-4 | 1000 | 7.0 |
| Example 4-5 | 800 | 7.5 |
| Example 4-6 | 650 | 8.6 |
| Example 5-1 | 900 | 6.1 |
| Example 5-2 | 850 | 6.3 |

As can be seen in Table 4 above, it can be confirmed that when the dispersions and slurries are manufactured using the carbon nanotubes according to the examples of the present invention, the dispersion viscosity is maintained at an appropriate level, thereby providing excellent processability, and the slurry powder resistance is low, thereby exhibiting excellent performance when used as a conductive material.

Meanwhile, in the case of the carbon nanotubes of the comparative examples that do not satisfy Equation 1 of the present invention or do not satisfy the appropriate specific surface area or bulk density range, it can be confirmed that all of them have significantly higher powder resistance during slurry production compared to the examples, and thus, the corresponding carbon nanotubes are less suitable for use as a conductive material.

**Claims**

1. A carbon nanotube **characterized by** satisfying Equation 1 below:

[Equation 1]

$$-0.004 * A + 0.0385 \leq R \leq -0.004 * A + 0.0425$$

wherein:

R is the powder resistance of the carbon nanotubes (Ω·cm),
A is $\ln\{$(purity of carbon nanotube (weight%) * specific surface area ($m^2$/g)) / bulk density (kg/$m^3$)$\}$,
wherein the specific surface area of the carbon nanotube is 320 $m^2$/g or more, and
the bulk density of the carbon nanotube is 30 kg/$m^3$ or less.

2. The carbon nanotube according to claim 1, wherein the specific surface area of the carbon nanotube is 320 to 500 $m^2$/g.

3. The carbon nanotube according to claim 1, wherein the bulk density of the carbon nanotube is 15 to 30 kg/$m^3$.

4. The carbon nanotube according to claim 1, wherein the R is 0.0125 Q cm or less.

5. The carbon nanotube according to claim 4, wherein The R is 0.0080 to 0.0125 Ω·cm.

6. A carbon nanotube dispersion including:

the carbon nanotube of claim 1; and
a dispersion medium.

7. The carbon nanotube dispersion according to claim 6, wherein the dispersion medium is at least one selected from the group consisting of N-methylpyrrolidone, pyridine, dimethylaminobenzene, and diethylaminobenzene.

8. The carbon nanotube dispersion according to claim 6, wherein the carbon nanotube content in the dispersion is 0.05 to 5% by weight.

9. A positive electrode slurry composition including:

   the carbon nanotube dispersion of claim 6;
   a positive electrode material; and
   a stabilizer.

10. The positive electrode slurry composition according to claim 9, wherein the stabilizer is contained in an amount of 10 to 100% by weight based on the content of the carbon nanotube in the positive electrode slurry composition.

## INTERNATIONAL SEARCH REPORT

| International application No. |
|---|
| **PCT/KR2023/016771** |

### A. CLASSIFICATION OF SUBJECT MATTER

**C01B 32/158**(2017.01)i; **C01B 32/174**(2017.01)i; **H01M 4/62**(2006.01)i; **H01M 4/02**(2006.01)i

According to International Patent Classification (IPC) or to both national classification and IPC

### B. FIELDS SEARCHED

Minimum documentation searched (classification system followed by classification symbols)

C01B 32/158(2017.01); B82B 3/00(2006.01); C01B 13/14(2006.01); C01B 31/02(2006.01); H01B 1/24(2006.01); H01B 13/00(2006.01); H01M 4/36(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소나노튜브(carbon nanotube, CNT), 분산(dispersion), 슬러리(slurry), 촉매(catalyst), 비표면적(specific surface area), 벌크 밀도(bulk density)

### C. DOCUMENTS CONSIDERED TO BE RELEVANT

| Category* | Citation of document, with indication, where appropriate, of the relevant passages | Relevant to claim No. |
|---|---|---|
| X | KR 10-2017-0028117 A (KOREA INSTITUTE OF ENERGY RESEARCH) 13 March 2017 (2017-03-13) See paragraphs [0023]-[0077]; and claims 1-14. | 1-6,8 |
| Y | | 7,9-10 |
| Y | KR 10-2019-0096738 A (LG CHEM, LTD.) 20 August 2019 (2019-08-20) See paragraphs [0028]-[0091]. | 7,9-10 |
| X | KR 10-2016-0036910 A (LG CHEM, LTD.) 05 April 2016 (2016-04-05) See paragraphs [0048]-[0049] and [0068]-[0082]; and examples 1-3. | 1-6 |
| A | CN 107482182 A (HONGBAOLI GROUP NANJING LITAI ENERGY TECHNOLOGY CO., LTD.) 15 December 2017 (2017-12-15) See entire document. | 1-10 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 February 2024** | **05 February 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/016771** |

**C. DOCUMENTS CONSIDERED TO BE RELEVANT**

| Category* | Citation of document, with indication, where appropriate, of the relevant passages | Relevant to claim No. |
|---|---|---|
| A | KR 10-2012-0021807 A (HANWHA CHEMICAL CORPORATION) 09 March 2012 (2012-03-09) <br> See entire document. | 1-10 |

**INTERNATIONAL SEARCH REPORT**
Information on patent family members

International application No.

**PCT/KR2023/016771**

| Patent document cited in search report | | | Publication date (day/month/year) | Patent family member(s) | | | Publication date (day/month/year) |
|---|---|---|---|---|---|---|---|
| KR | 10-2017-0028117 | A | 13 March 2017 | KR | 10-1791484 | B1 | 30 October 2017 |
| KR | 10-2019-0096738 | A | 20 August 2019 | KR | 10-2425557 | B1 | 26 July 2022 |
| KR | 10-2016-0036910 | A | 05 April 2016 | KR | 10-1781252 | B1 | 22 September 2017 |
| CN | 107482182 | A | 15 December 2017 | CN | 107482182 | B | 15 January 2021 |
| KR | 10-2012-0021807 | A | 09 March 2012 | KR | 10-1264147 | B1 | 14 May 2013 |

Form PCT/ISA/210 (patent family annex) (July 2022)

**EP 4 464 660 A1**

**Patent documents cited in the description**

- KR 1020220141851
- KR 1020170031061 A